# EUROPEAN PATENT SPECIFICATION

(11) **EP 3 385 824 B1**
(45) Date of publication and mention of the grant of the patent: **20.04.2022**
(21) Application number: 18169861.4
(22) Date of filing: 07.12.2006
(51) Int. Cl.: G06F 3/041, G06F 3/048, G06F 3/0481, G06F 3/0482, G06F 3/0486, G06F 3/0488

(54) **MOBILE DEVICE AND OPERATION METHOD CONTROL AVAILABLE FOR USING TOUCH AND DRAG**
MOBILE VORRICHTUNG UND BEDIENUNGSVERFAHRENSSTEUERUNG, DIE ZUR VERWENDUNG VON BERÜHREN UND ZIEHEN VERFÜGBAR IST
DISPOSITIF MOBILE ET COMMANDE DE PROCÉDÉ DE FONCTIONNEMENT DISPONIBLES POUR L'UTILISATION DE LA FONCTION TOUCHER-DÉPOSER

(30) Priority: 13.12.2005 KR 20050122566; 27.11.2006 KR 20060117814
(43) Date of publication of application: 10.10.2018
(62) Divisional of application: 06823983.9
(73) Proprietor: Samsung Electronics Co., Ltd., Gyeonggi-do, 443-742 (KR)
(72) Inventor: LEE, Hyun-Jeong, 449-712 Gyeonggi-do (KR); SOH, Byung-Seok, 449-712 Gyeonggi-do (KR); PARK, Joon-Ah, 449-712 Gyeonggi-do (KR)
(74) Representative: Grünecker Patent- und Rechtsanwälte PartG mbB

(56) References cited:
- WO-A1-2005/041020
- GB-A- 2 329 813
- US-A1- 2003 076 362
- US-B1- 6 590 568
- BAUDISCH ET AL: "Drag-and-Pop and Drag-and-Pick: Techniques for Accessin Remote Screen Content on Touch- and Pen-Operated Systems", HUMAN-COMPUTER INTERACTION / INTERACT '03, IFIP TC.13 INTERNATIONAL CONFERENCE ON HUMAN-COMPUTER INTERACTION, 1ST - 5TH SEPTEMBER 2003, ZURICH, SWITZERLAND, IOS PRESS, AMSTERDAM, NL, 1 September 2003 (2003-09-01), pages 57-64, XP002618610, ISBN: 978-1-58603-363-7
- "E-TEN P700 Specification Operating system Windows Mobile TM 2003 software for Pocket PC Phone Edition Processor Intel ? PXA255 400 MHz Processor", , 1 January 2003 (2003-01-01), XP055228996, Retrieved from the Internet: URL:http://web.archive.org/web/20050428105 249/http://www.etencorp.com/products/downl oad/P700_spec_1114.pdf [retrieved on 2015-11-17]

## Description

### Technical Field

The present invention relates to a mobile device that can be controlled using a touch and drag operation and an operating method of the mobile device, and more particularly, to a mobile device that can be controlled using a touch and drag operation and an operating method of the mobile device, in which a function corresponding to a menu icon can be executed in an execution zone when a user selects the menu icon and drags the menu icon into the execution zone.

### Background Art

Recently, content providing servers which provide various data streams such as moving image programs in real time via the Internet or mobile networks have been commercialized.

Personal computers (PCs) connected to the Internet, mobile phones connected to a mobile network, personal digital assistants (PDAs) connected to an access point, and portable media players (PMPs) can receive data streams from such content providing servers in real time and process the received data streams, thereby enabling users to view various moving picture programs via networks.

In particular, PMPs, which are portable devices capable of reproducing a variety of multimedia files (e.g., video, music, and photo files) ranging from MP3 music files to still image/moving image content, can be equipped with various additional functions and can be designed based on an embedded system comprising a central processing unit (CPU), memories, auxiliary memories, and peripheral devices. Thus, PMPs can perform multiple tasks at the same time.

In addition, keyboard-equipped electronic dictionaries that can be converted into portable MP3 players (can perform the functions of portable MP3 players and Operating System (OS)-based PDAs that are capable of reproducing various multimedia files and provide a dictionary function have been commercialized.

However, when multiple tasks are performed using a PMP, a plurality of switches respectively corresponding to the multiple tasks must be manipulated independently and frequently. When a PMP is equipped with a touch screen or a touch sensor, a user may mistakenly turn on a switch that executes a function, thereby causing the PMP to malfunction.

US 2003/0076362 A1 discloses a display control method and a display control processing system for displaying a concealed window on a desktop, by which an operator can drop an object in a window as a destination of drop even if the window as the destination of drop is concealed on the desktop prior to start of the drag. Also disclosed is a display control method and a display control processing system for displaying a concealed window on a desktop, by which the operator can execute easily the drop of the object even if an application that receives the drag is not started at a point of time when the drag is started.

BAUDISCH ET AL: "Drag-and-Pop and Drag-and-Pick: Techniques for Accessin Remote Screen Content on Touch- and Pen-Operated Systems", HUMAN-COMPUTER INTERACTION / INTERACT '03, IFIPTC.13 INTERNATIONAL CONFERENCE ON HUMAN-COMPUTER INTERACTION discloses drag-and-pop as an extension of traditional drag-and-drop. As the user starts dragging an icon towards some target icon, drag-and-pop responds by temporarily moving potential target icons towards the user's current cursor location, thereby allowing the user to interact with these icons using comparably small hand movements. Drag-and-Pick extends the drag-and-pop interaction style such that it allows activating icons, e.g., to open folders or launch applications.

"E-TEN P700 Specification Operating system Windows Mobile TM 2003 software for Pocket PC Phone Edition Processor Intel^{®} PXA255 400 MHz Processor", 1 January 2003, discloses a mobile phone including a touch screen and a Windows mobile operating system.

US 6 590 568 B1 discloses that a touchscreen input is detected. A determination is made that the value of the pressure of the touch input is greater than a predetermined value over the period of time that the object touches the touch screen, which is greater than a predetermined time. A determination is made that the value of the pressure of the object on the touch screen has been reduced by an amount greater than a predetermined pressure differential. The object is dragged across the face of the touchscreen at the reduced pressure of the object on the touchscreen. A second touch input is detected by determining that the value of the pressure of the object on the touch screen is greater than a predetermined pressure value over a period of time. The object of the first touch input is then moved to the object of the second touch input.

WO 2005/041020 A1 discloses that a shortcut to a certain function can be performed by touching a touch sensitive object on the display, a shortcut key. When one wants to change the place of a certain shortcut key on the touch screen one proceeds as follow. The shortcut key to be shifted is selected by pressing it or by pointing at it, for instance with a finger. Then one moves the finger on the touch screen towards a second shortcut key, into which one wants to shift the functions of the first selected key. When the finger has been moved onto that shortcut key into which one wants to shift the first selected shortcut key, then one releases the finger from the touch screen. Then the selected first shortcut key and the second shortcut key, onto which the finger was moved, interchange their contents and functions.

GB 2 329 813 A discloses that instead of using pull-down menus or drop down lists, the graphical user interface provides a selection list based upon virtual control buttons and virtual "image buttons" in which each image button is labeled to describe the option that can be selected by pressing that button. In situations where touching a control button opens a second level of the menu, this second level of menu choices (or "image buttons") is either docked adjacent to the display's work area, or is launched as a floating window on top of the work area. The user also may reconfigure the control buttons which are provided as a tabbed panel for easy actuation on the touch screen display.

It is the object of the present invention to provide an improved method, device and computer program product for control using a touch and drag operation.

This object is solved by the subject matter of the independent claims.

Embodiments are defined in the dependent claims.

### Technical Problem

Aspects of the present invention provide a mobile device that can be controlled using a touch and drag operation and an operating method thereof in which a function corresponding to a menu icon can be executed in an execution zone when a user selects the menu icon and drags the menu icon into the execution zone.

Aspects of the present invention also provide a mobile device that can be controlled using a touch and drag operation and an operating method thereof in which a plurality of functions can be executed when a plurality of icons are selected are selected and then respective corresponding touch positions are shifted

### Technical Solution

According to an aspect of the present invention, there is provided a mobile device that can be controlled using a touch and drag operation. The mobile device includes a sensing module which senses movement of an object from a first zone to a second zone, a function execution module which executes a function according to the sensed movement, and a display module which displays information regarding the function.

According to another aspect of the present invention, there is provided an operating method of a mobile device that can be controlled using a touch and drag operation. The operating method includes sensing movement of an object from a first zone to a second zone, executing a function according to the sensed movement, and displaying information regarding the function.

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings denote like elements, and thus their description will be omitted.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

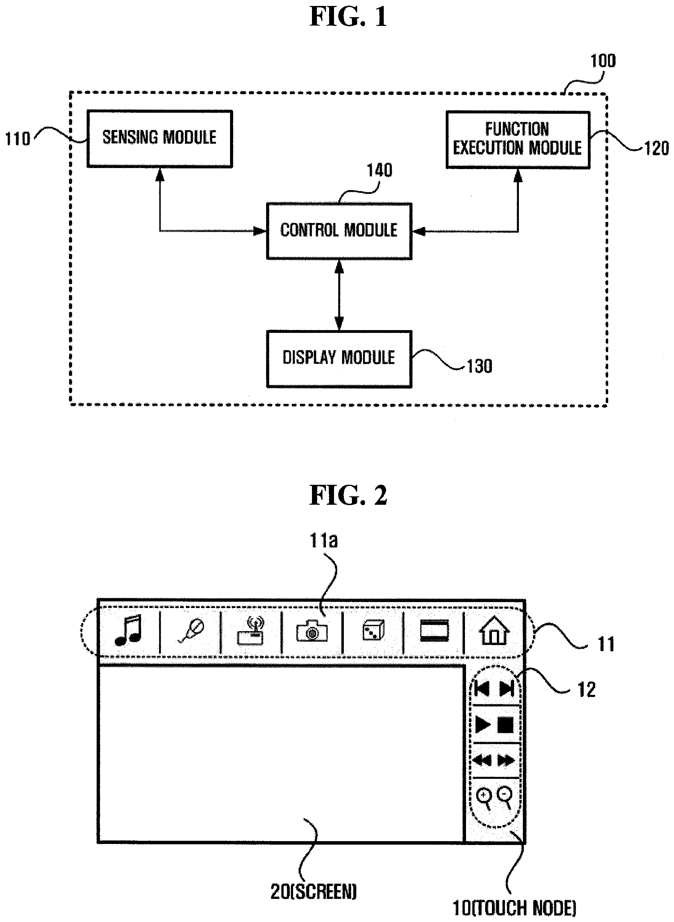

FIG. 1 is a block diagram of a mobile device 100 that can be controlled using a touch and drag operation according to an exemplary embodiment of the present invention. Referring to FIG. 1, the mobile device 100 includes a sensing module 110 which senses the movement of an object from a first zone to a second zone, a function execution module 120 which executes a function according to the movement of the object, a display module 130 which displays information regarding the function executed by the function execution module 120, and a control module 140 which controls the sensing module 110, the function execution module 120, and the display module 130.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The mobile device 100 may be a personal digital assistant (PDA), a portable media player (PMP), a play station portable (PSP), and an MP3 player, and a mobile phone that provides a touch and drag function.

The sensing module 110 senses the movement of an object from a first zone to a second zone.

The first zone may include a place where the movement of the object begins, and the second zone may include a place where the movement of the object ends. The object may be a finger of a user or a stylus pen that can be used on a touch screen instead of a finger of the user.

The sensing module 110 senses the beginning and ending of the movement of a finger of the user or a stylus pen on a touch screen.

For convenience of description, it will now be assumed that the user manipulates the mobile device 100 with his/her finger.

According to the present exemplary embodiment, the first zone may be a place where a plurality of menu icons that can be manipulated by the user are displayed, and may be a place where the movement of one of the menu icons selected by the user by a drag operation begins.

The second zone may include a place where information regarding a function corresponding to a menu icon selected from the first zone by the user is displayed, and may include a place where the movement of the selected menu icon by a drag operation ends.

The execution of a function corresponding to a menu icon may be interpreted as implying both the initiation and termination of a function corresponding to a menu icon.

The first zone may not necessarily display a plurality of menu icons that can be manipulated by the user are displayed, and the second zone may not necessarily display information regarding a function corresponding to one of the menu icons selected by the user.

According to the present exemplary embodiment, the first zone can be distinguished from the second zone in terms of where the movement of a finger (hereinafter referred to as the touching finger) of the user that touches the display module 130 begins and ends.

In order to terminate a function (hereinafter referred to as the current function) currently being executed by the mobile device 100, the user may drag a predetermined menu icon back into a place where the predetermined menu icon is previously located along with other menu icons, i.e., the first zone, from a place where information regarding the current function is displayed, i.e., the second zone. In this case, the movement of the touching finger begins in the second zone and ends in the first zone.

The distinction between the first zone and the second zone is not restricted to that set forth herein. For convenience, a place where a plurality of menu icons that can be manipulated by the user are displayed will hereinafter be referred to as the first zone, and a place where information regarding a function corresponding to one of the menu icons selected by the user is displayed will hereinafter be referred to as the second zone.

When the user selects one of a plurality of menu icons 11 displayed in the first zone, the sensing module 110 determines whether the touching finger touches the selected menu icon 11. For this, the sensing module 110 may receive a signal generated by one or more touch sensors.

Also, the sensing module 110 determines the position (hereinafter referred to as the touch position) of the touching finger and whether the touch position has been shifted.

The touch position is shifted when the user selects one of the menu icons 11 displayed in the first zone and then drags the selected menu icon 11 into the second zone.

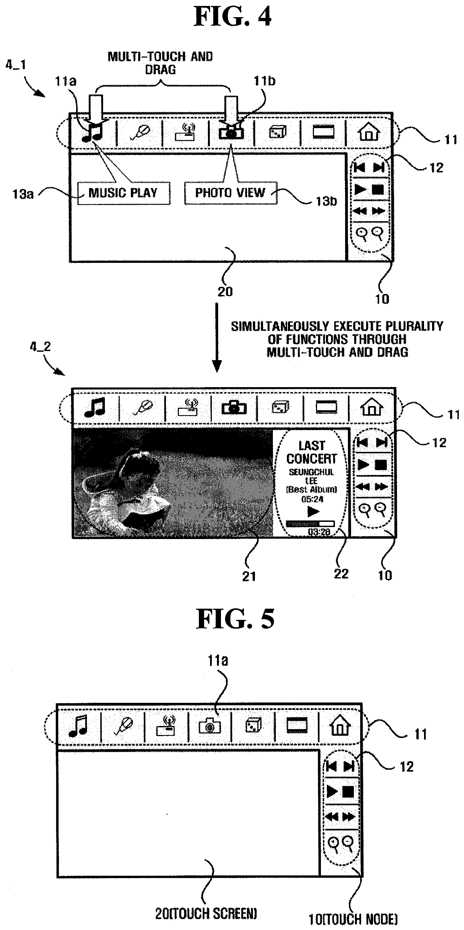

The determination of whether the touch position has been shifted will be described later in detail with reference to FIG. 4.

The sensing module 110 may determine whether the user has selected more than one menu icon 11 by determining one of the duration (hereinafter referred to as the touch duration) for and the speed (hereinafter referred to as the touch speed) at which the touching finger touches the first zone and the distance (hereinafter referred to as the touch distance) by which the touching finger travels after touching the first zone.

If the sensing module 110 determines that the user has selected more than one menu icon 11, the function execution module 120 may simultaneously execute a plurality of functions respectively corresponding to the selected menu icons 11.

If the sensing module 110 determines that the touching finger is currently placed on one of the menu icons 11, the sensing module 110 provides the function execution module 120 with information regarding a menu icon 110 corresponding to the touch position determined by the sensing module 110. Thereafter, if the sensing module 110 determines that the touch position has been shifted from the first zone to the second zone, the sensing module 110 executes a function corresponding to the menu icon 110 corresponding to the touch position determined by the sensing module 110.

In detail, when the user touches the first zone with the touching finger, the sensing module 110 determines a touch position, and provides the function execution module 120 with information regarding a menu icon 11 corresponding to the touch position. Thereafter, if the touch position is determined to have been shifted from the first zone to the second zone, the function execution module 120 executes a function corresponding to the menu icon 11 corresponding to the determined touch position.

Information regarding a menu icon 11 is a description of the menu icon 11. Information regarding a menu icon 11 may be useful when the menu icon 11 is not sufficient to indicate a function corresponding to the menu icon 11 or when the menu icon 11 is hidden from view by the touching finger.

The function execution module 120 may control a function currently being executed according to information provided by the sensing module 110 regarding the touch duration, the touch speed, and the touch distance.

The display module 130 displays information regarding a function that is executed in connection with one of the menu icons 11 selected by the user. The display module 130 may include at least one of the first zone and the second zone.

If the selected menu icon 11 is a menu icon 'Moving Picture', a moving picture may be displayed on a screen as information regarding a function corresponding to the selected menu icon 11. If the selected menu icon 11 is a menu icon 'Photo', an image may be displayed on the screen as the information regarding the function corresponding to the selected menu icon 11.

If the selected menu icon 11 is a menu icon 'Music', an icon displaying a music play state (e.g., an icon indicating whether a music file is currently being played, whether the playback of the music file is temporarily stopped, whether the music file is put on fast forward) and text data indicating a list of music files to be played may be included in the information regarding the function corresponding to the selected menu icon 11.

The control module 140 controls the operations of the sensing module 110, the function execution module 120, and the display module 130. The control module 140 is provided with the result of determination performed by the sensing module 110, determines whether to execute a predetermined command , and gives instructions to the function execution module 120 to execute the predetermined command, and gives instructions to the display module 130 to change the screen.

FIGS. 2 through 4 are diagrams for illustrating a display module included in a mobile device that can be controlled using a touch and drag operation according to an exemplary embodiment of the present invention (an example of the display module 130).

Referring to FIG. 2, the mobile device (the display module 130) includes a first zone 10 which is inversed L-shaped and displays a plurality of menu icons 11 and a plurality of sub-menu icons 12 that can be manipulated by a user, and a second zone 20 which displays information regarding a function that is executed in connection with one of the menu icons 11 or the sub-menu icons 12 selected by the user.

The user selects a predetermined menu icon 11 from among the menu icons 11 that are displayed in the first zone 10, and drags the selected menu icon 11 downward (i.e., in a direction from the first zone 10 to the second zone 20).

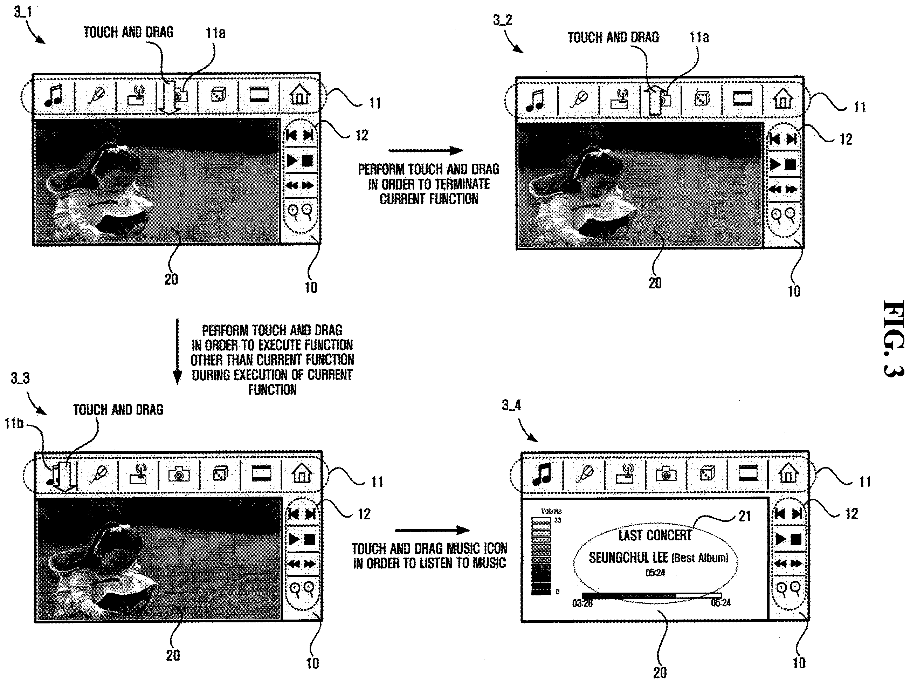

For example, referring to FIG. 3_1, when the user selects a photo icon 11a in the first zone 10 and drags the photo icon 11a downward, an image is displayed in the second zone 20. The user may control an image currently being displayed in the second zone 20 or view an image previous or subsequent to the image currently being displayed in the second zone 20 by manipulating the sub-menu icons 12

Referring to FIG. 3_2, in order to terminate a function currently being executed, e.g., a photo view function, the user may select the photo icon 11a and then drag the photo icon 11 upward (i.e., in a direction from the second zone 20 to the first zone 10).

In order to execute a function other than a current function during the execution of the current function, the user may select a menu icon 11 other than a menu icon 11 corresponding to the current function so that the current function can be readily replaced with a function corresponding to the selected menu icon 11.

For example, referring to FIG. 3_3, in order to listen to music in the middle of viewing images, the user may select a music icon 11b and drag the music icon 11b toward the second zone 20. Then, information 21 regarding a function (i.e., a music play function) that is executed in connection with the music icon 11a is displayed in the second zone 20, as illustrated in FIG. 3_4. The user may control the music play function using the sub-menu icons 12. For example, the user may temporarily stop the playback of a current music file or play a music file subsequent to the current music file using the sub-menu icons 12.

In addition, the user may simultaneously execute a plurality of functions respectively corresponding to a plurality of menu icons 11. In this case, a plurality of pieces of information respectively corresponding to the menu icons 11 may be displayed in the second zone 20.

For example, referring to FIG. 4, when the user selects both of the music icon 11a and the photo icon 11b, information 13a regarding the music icon 11a and information 13b regarding the photo icon 11b is displayed in the second zone 20. Then, if the user drags both of the music icon 11a and the photo icon 11b in the direction from the first zone 10 to the second zone 20, functions respectively corresponding to the music icon 11a and the photo icon 11b are executed, and information regarding the music play function and information regarding the photo view function, e.g., music play state information 22 and an image 21, are displayed in the second zone 20.

If there exist n commands in association with a predetermined function, information regarding each function may be displayed occupying 1/n of the area of the second zone 20. The user may adjust the proportion of the area occupied by the information regarding each function to the area of the second zone 20 using a function of the mobile device 100 such as configuration.

For example, referring to FIG. 4, when a music player and a photo viewer are executed at the same time, the mobile device 100 can be set such that information regarding a function of the photo viewer can occupy 2/3 of the area of the second zone 20 when being displayed in the second zone 20.

FIGS. 5 through 8 are diagrams for illustrating a display module included in a mobile device that can be controlled using a touch and drag operation according to another exemplary embodiment of the present invention (another example of the display module 130 illustrated in FIG. 1). The operation of each module of the mobile device will hereinafter be described in detail with reference to FIG. 1.

The mobile device (the display module 130) includes a first zone 10 which is an inversed L-shaped and displays a plurality of menu icons 11 that can be manipulated by a user, and a second zone 20 which displays information regarding a function that is executed in connection with a menu icon 11 when a touch position is shifted to a predetermined area when the menu icon 11 is selected).

Here, a shift in the touch position indicates the movement of the touching finger from the first zone 10 to the second zone 20.

The first zone 10 includes a plurality of touch sensors. The touch sensors determine whether the user touches and selects any of the menu icons 11. In detail, the touch sensors may determine the direction of a touch and drag operation performed by the user and determine whether the user selects more than one menu icon 11.

The touch sensors may be force sensors or capacitive sensors (e.g., ESSD's SS01, Quantum's QTouch, and ALPS' GlideSensor).

The second zone 20, i.e., a display module 130, may be realized as a touch screen and recognize a touch and drag operation performed by the user. Here, the touch screen may be a four-wire or five-wire resistive touch screen, a Near Field Imaging (NFI) capacitive touch screen, or a surface wave sensory touch screen using infrared rays (IR) and ultrasound waves.

Referring to FIG. 1, the sensing module 110 determines the location of one of the menu icons 11 selected by the user with the aid of one or more touch sensors included in the first zone 10. If the user drags the selected menu icon 11 into the second zone 20, the touch sensors or a touch screen may determine the direction (hereinafter referred to as the drag direction) in which the selected menu icon 11 is dragged and the position (hereinafter referred to as the drag position) to which the selected menu icon 11 is dragged.

If the touch position has been shifted to the second zone 20 as a result of the movement of the selected menu icon 11, the sensing module 110 provides the function execution module 120 with information regarding a menu icon 11 corresponding to the touch position (information regarding the selected menu icon 11). Then, the function execution module 120 executes a function corresponding to the selected menu icon 11.

Thereafter, if the user selects one of the menu icons 11 displayed in the first zone 10 and then shifts a touch position by dragging the selected menu icon 11 into the second zone 20, a function corresponding to the selected menu icon 11 is executed, and information regarding the function is displayed in the second zone 20.

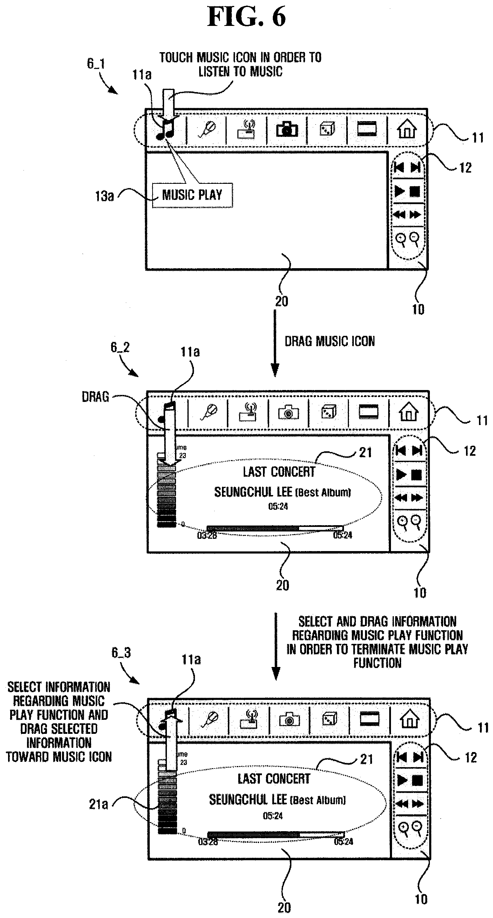

For example, referring to FIG. 6_1, when the user selects a music icon 11a from a plurality of menu icons 11 displayed in a first zone 10, information 13a indicating that a function corresponding to the music icon 11a is a music play function is displayed in the second zone 20.

Thereafter, referring to FIG. 6_2, if the user shifts a touch position from the music icon 11a to the second zone 20, the music play function is executed, and information 21 regarding the music play function is displayed in the second zone 20.

Thereafter, the user may control the music play function using a plurality of sub-menu icons 12 displayed in the first zone 10. For example, the user may temporarily stop the playback of a current music file or play a music file subsequent to the current music file.

Referring to FIG. 6_3, the user may terminate a function currently being executed, i.e., the music play function, by selecting a piece of information 21a from the information 21 regarding the music play function, and dragging the selected piece of information 21a into the first zone 10.

In order to execute a predetermined function during the execution of a current function, the user may select a menu icon 11 corresponding to the predetermined function and drag the selected menu icon 11 into the second zone 20 so that the current function can be readily replaced with the predetermined function.

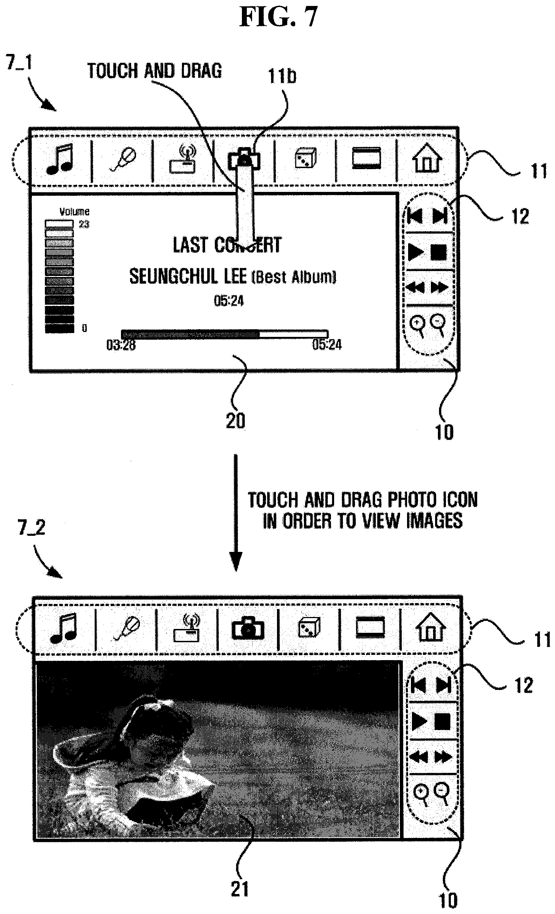

For example, referring to FIG. 7_1, in order to view images in the middle of listening to music, the user may select a photo icon 11b and drag the photo icon 11b into the second zone 20. Then, information indicating that a photo view function is currently being executed, i.e., an image 21, is displayed in the second zone 20. The user may control the image 21 using a plurality of sub-menu icons 12 displayed in the first zone 10. For example, the user may enlarge or reduce the image 21 or view an image subsequent to the image 21 using the sub-menu icons 12.

If the user selects more than one menu icon 11 at the same time, the function execution module 120 may be provided with information regarding each of the selected menu icons 11 by the sensing module 110, and control the display module 130 to display the information in the second zone 20.

Thereafter, if the user drags the selected menu icons 11 into the second zone 20 at the same time, the function execution module 120 may simultaneously execute a plurality of functions respectively corresponding to the selected menu icons 11, and the display module 130 may simultaneously display a plurality of pieces of information respectively corresponding to the functions in the second zone 20.

If there exist n functions, the display module 130 may display information regarding each of the n functions in the second zone 20 so that information regarding each of the n functions can occupy 1/n of the area of the second zone 20.

The user may adjust the area occupied by information regarding each function when the information is displayed in the second zone 20. In detail, the user may select one of a plurality of pieces of information respectively corresponding to a plurality of functions and scroll the selected piece of information, thereby increasing or reducing the area occupied by the selected piece of information when the selected piece of information is displayed in the second zone 20.

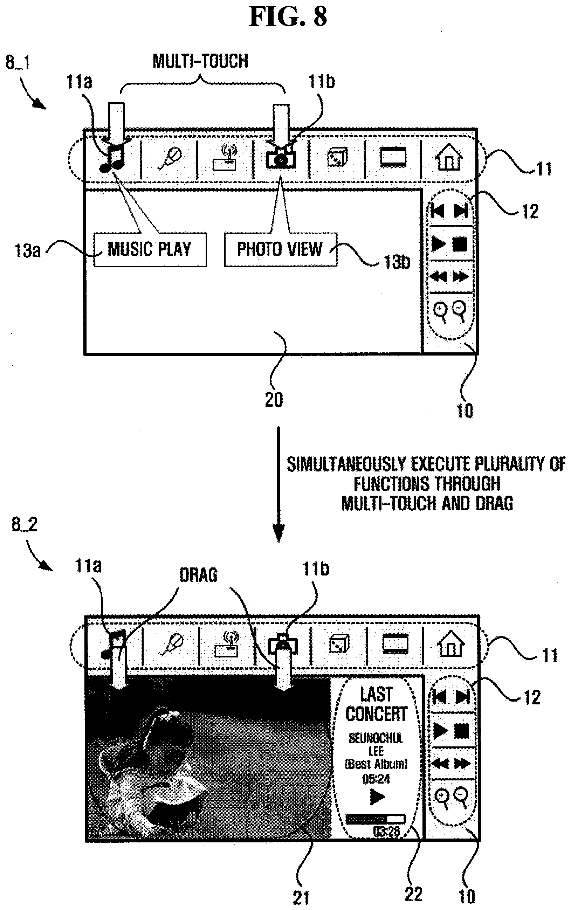

For example, referring to FIG. 8_1, when the user selects the music icon 11a and the photo icon lib at the same time, information 13a indicating that a function corresponding to the music icon 11a is a music play function and information 13b indicating that a function corresponding to the photo icon 11b is a photo view function is displayed in the second zone 20.

Thereafter, referring to FIG. 8_2, if touch positions associated with the selection of the music icon 11a and the photo icon 11b are shifted to the second zone 20, the music play function and the photo view function are simultaneously executed, and information regarding the music play function and the photo view function, e.g., an image 2 and music play state information 22, are displayed in the second zone 20.

In order to terminate one of a plurality of functions currently being executed, the user may select one of a plurality of pieces of information respectively corresponding to the functions and drag the selected piece of information into the first zone 10.

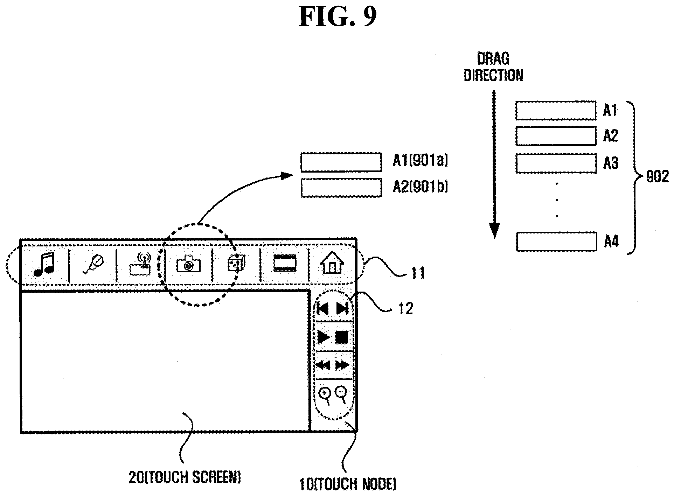

FIG. 9 is a diagram for explaining the determination of whether a touch and drag operation has been performed in a mobile device that can be controlled using a touch and drag operation according to an exemplary embodiment of the present invention (the mobile device 100 illustrated in FIG. 1, according to an exemplary embodiment of the present invention). Referring to FIG. 9, a first zone 10 includes a plurality of touch sensors(901a, 901b). When a user selects one of a plurality of menu icons 11 displayed in the first zone 10 and drags the selected menu icon 11 into a second zone 20, the touch sensors(901a, 901b) are being sequentially touched, for example, in the order of A1 and A2, by the user.

According to the present exemplary embodiment, the touch sensors(901a, 901b) are arrayed so that two touch sensors 901a (A1) and 901b (A2) can be allocated to each column. However, the touch sensors 15 may be arrayed so that more than two touch sensors (e.g., touch sensors 902 (A1 through A4)) can be allocated to each column.

The sensing module 110 senses that a touch position of a touching finger of the user is currently located in the second zone 20 (i.e., a touch screen).

Then, the sensing module 110 determines whether the touch position has been shifted based on the order in which the touch sensors 15 are being touched by the user (e.g., the order of A1 and A2) and the current location of the touch position.

The sensing module 110 can determine whether the user wishes to execute or terminate a function corresponding to one of the menu icons 11 displayed in the first zone 10 according to whether the touch position has been shifted.

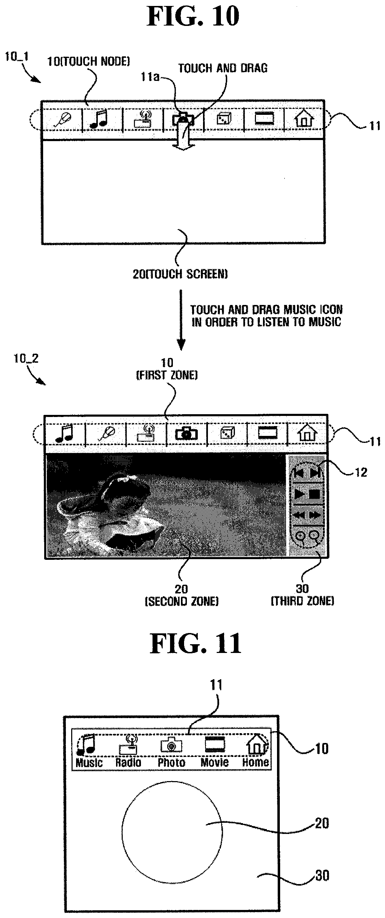

FIG. 10 is a diagram for illustrating a display module included in a mobile device that can be controlled using a touch and drag operation according to another exemplary embodiment of the present invention (another example of the display module 130 illustrated in FIG. 1). Referring to FIG. 10_2, the mobile device includes multiple sensor nodes (not shown), a first zone 10 which displays a plurality of menu icons 11 that can be manipulated by a user, a second zone 20 which displays information regarding a function that is executed in connection with one of the menu icons 11 selected by the user, and a third zone 30 which displays a plurality of sub-menu icons 12 that are used to control the information displayed in the second zone 20.

The second zone 20, the third zone 230, and the display module 130 may be integrated into one body, and the touch module 130 may be realized as a touch screen.

The display module 130 may not be initially divided into the second zone and the third zone 30.

In detail, referring to FIG. 10_1, when the user selects a photo icon 11a from among the menu icons 11 displayed in the first zone 10 and shifts a touch position by dragging the photo icon 11a to the second zone 20, the third zone 30 is formed in the second zone 20 so that the third zone 30 can be distinguished from the second zone 20.

The third zone 30 displays a plurality of sub-menu icons 12 of a menu icon 11 selected from the first zone 10 by the user. The sub-menu icons 12 control information displayed in the second zone 20 regarding a function that is executed in connection with the selected menu icon 11.

The display module 130 illustrated in FIG. 10 is different from the display module 130 illustrated in FIGS. 5 through 8 by including the third zone 30 in that the display module 130 illustrated in FIG. 10 includes the third zone 30 and thus displays a plurality of sub-menu icons 12 in the third zone when the user selects one of the menu icons 11 displayed in the first zone and shifts a touch position by dragging the selected menu icon 11 into the second zone 20, whereas the display module 130 illustrated in FIGS. 5 through 8 displays a plurality of sub-menu icons 12 in the first zone 10 from the beginning.

An operating method of the display module 130 illustrated in FIGS. 10_1 and 10_2 when the user selects more than one menu icon 11 from the first zone 10 and thus more than one function is executed at the same time, when the user wishes to perform a function other than a current function during the execution of the current function, or when the user terminates the current function is the same as in the exemplary embodiment described above with reference to FIGS. 5 through 8.

FIGS. 11 through 13 are diagrams for illustrating a display module included in a mobile device that can be controlled using a touch and drag operation according to another exemplary embodiment of the present invention (another example of the display module 130 illustrated in FIG. 1). Referring to FIG. 11, the mobile device (the display module 130) includes a first zone 10 which displays a plurality of menu icons 11 that can be manipulated by a user, a second zone 20 which displays information regarding a function that is executed in connection with one of the menu icons 11 selected by the user, and a third zone 30 which displays a plurality of sub-menu icons 12 that are used to control the information displayed in the second zone 20.

Referring to FIG. 11, the first zone 10, the second zone 20, the third zone 30, and the display module 130 are integrated into one body, and the display module 130 is realized as a touch screen.

Information regarding each of the menu icons 11 displayed in the first zone may be displayed along with the corresponding menu icon 11. Alternatively, information regarding each of the menu icons 11 may be displayed in the second zone 20 when the corresponding menu icon 11 is selected by the user, as described above with reference to FIG. 8.

Referring to FIGS. 11 through 13, information regarding each of the menu icons 11 is displayed along with the corresponding menu icon 11 from the beginning.

When the user selects one of the menu icons 11 displayed in the first zone 10 and shifts a touch position by dragging the selected menu icon 11 into the second zone 20, a function corresponding to the selected menu icon 11 is executed, and information regarding the function is displayed in the second zone 20.

Then, a plurality of sub-menu icons 12 that control the information displayed in the second zone 20 are displayed in the third zone 30. Thus, the user can control the information displayed in the second zone 20 using the sub-menu icons 12 displayed in the third zone 30.

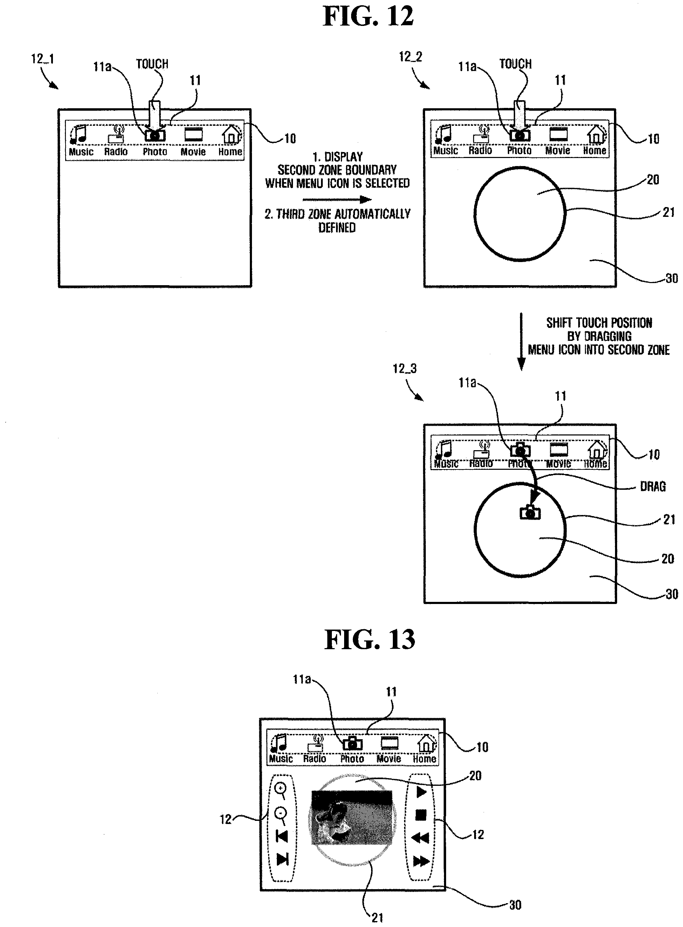

Referring to FIGS. 12 and 13, information regarding a function that is executed in connection with one of the menu icons 11 selected by the user is displayed in the second zone 20, and a plurality of sub-menu icons 12 that are used to control the information displayed in the second zone 20 are displayed in the third zone 30.

For example, referring to FIGS. 12_1 and 12_2, when the user selects a photo icon 11a displayed in the first zone 10, the display module 130 displays a second zone boundary 21.

Once the second zone boundary 21 is displayed, the first zone 10, the second zone 20 and the third zone 30 are automatically defined and are clearly distinguished from each other. Accordingly, it is possible to provide the user with information indicating where to begin and end dragging the photo icon 11a.

Thereafter, the user shifts a touch position to the inside the second zone boundary 21, i.e., shifts the touch position to the second zone 20, by dragging the photo icon 11a.

Referring to FIG. 12_3, the display module 130 feeds back the photo icon 11a to the user, thereby enabling the user to easily determine which of the menu icons 11 is currently being selected and providing the user with intuition so that the user can easily move the menu icon 11 currently being selected, i.e., the photo icon 11a, to the inside of the second zone boundary 21.

Once the user shifts the touch position to the second zone 20 by dragging the photo icon 11a, the display module 130 makes the second zone boundary 21 disappear and displays an image in the second zone 20 as information regarding a function that is executed in connection with the photo icon 11a.

The image displayed in the second zone 20 may be stored in a storage module of the mobile device 100 or may be received from an external device.

Thereafter, the display module 130 displays a plurality of sub-menu icons 12 that control the image displayed in the second zone 20 in the third zone 30.

In detail, the user may select one of the sub-menu icons 12 and drag the selected sub-menu icon 12 into the second zone 20, thereby performing various operations such as enlarging or reducing a current image, opening up an image file folder, and viewing an image previous or subsequent to the current image.

An operating method of the display module 130 illustrated in FIGS. 11 through 13 when the user selects more than one menu icon 11 from the first zone 10 and thus more than one function is executed at the same time, when the user wishes to execute a function other than a current function during the execution of the current function or when the user terminates the current function is the same as in the exemplary embodiment described above with reference to FIGS. 5 through 8.

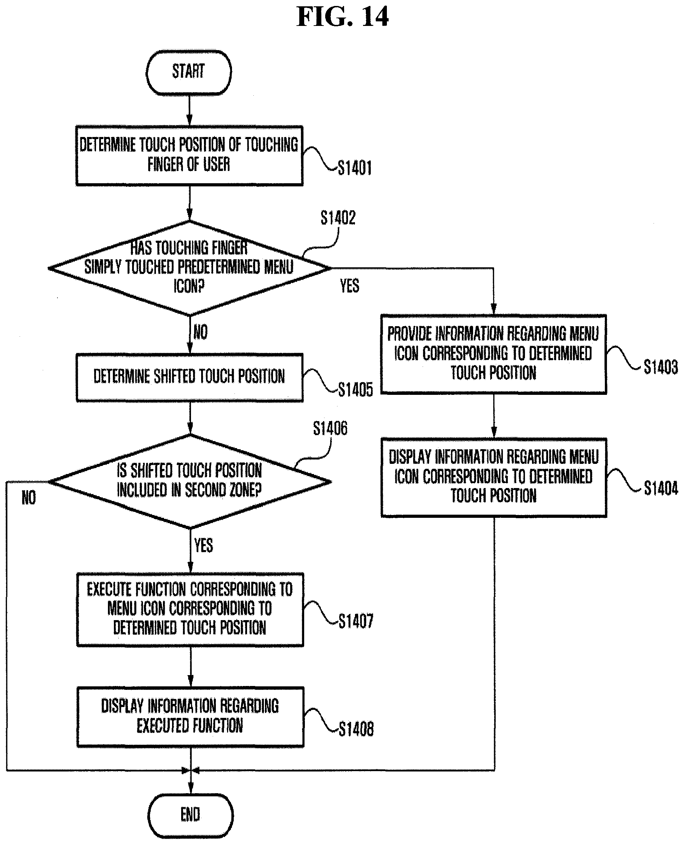

FIG. 14 is a flowchart illustrating an operating method of a mobile device that can be controlled using a touch and drag operation, according to an exemplary embodiment of the present invention. The operating method illustrated in FIG. 14 involves executing a function corresponding to a menu icon 11 selected and dragged by a user. For convenience, the operating method illustrated in FIG. 14 will hereinafter be described in detail with reference to FIG. 1.

Referring to FIG. 14, in operation S1401, the sensing module 110 determines a touch position of a touching finger of a user when a predetermined menu icon 10 displayed in the first zone 10 is selected (S1401).

In operation S1402, the sensing module 110 determines whether the touching finger has simply touched the predetermined menu icon 11 or has touched and dragged the predetermined menu icon 11, i.e., determines whether the touching finger has simply touched the predetermined menu icon 11 or not.

For example, when the user drags the predetermined menu icon 11, the sensing module 110 senses that a plurality of touch sensors 15 included in the first zone 10 have been sequentially touched, for example, in ascending order, by the touching finger and that the touching finger is currently located in a predetermined function execution zone, i.e., the second zone 20. Then, the sensing module 110 recognizes that the user has performed a drag operation.

In operation S1403, if it is determined in operation S1402 that the touching finger has simply touched the predetermined menu icon 11 so that the predetermined menu icon 11 can be selected, the sensing module 110 requests the function execution module 120 to display information regarding the predetermined menu icon 11 in the second zone 20.

In operation S1404, the function execution module 120 controls the display module 130 to display the information regarding the predetermined menu icon 11 (e.g., information indicating that the predetermined menu icon 11 is related to a music player) in the second zone 20.

In operation S1405, if it is determined in operation S1402 that the touching finger has not simply touched the predetermined menu icon 11 but has shifted the touch position, the sensing module 110 determines the shifted touch position based on a touch sensing signal transmitted thereto, and determines whether the shifted touch position is included in the second zone 20.

In operation S1407, if it is determined in operation S1406 that the shifted touch position is included in the second zone 20, the function execution module 120 executes a function corresponding to the predetermined menu icon 11.

In operation S1408, the display module 130 displays information regarding the function corresponding to the predetermined menu icon 11 in the second zone 20.

When the user selects and then drags the predetermined menu icon 11, the sensing module 110 senses a shift in the touch position and determines that the predetermined menu icon 11 has been dragged by the user. Then, the function execution module 120 readily executes a function corresponding to the predetermined menu icon 11 without providing information regarding the predetermined menu icon 11.

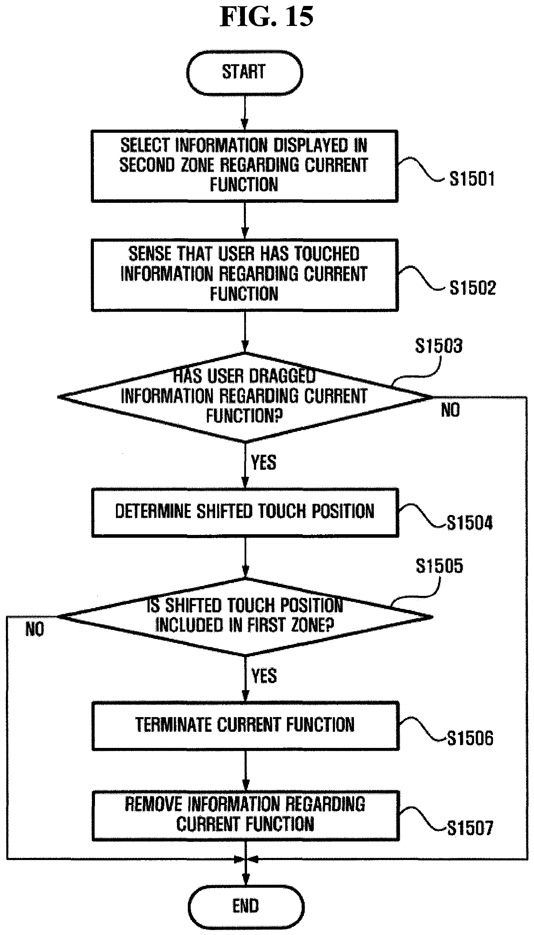

FIG. 15 is a flowchart illustrating a method of terminating a function currently being executed by a mobile device according to an exemplary embodiment of the present invention. For convenience, the method illustrated in FIG. 15 will hereinafter be described in detail with reference to FIG. 1.

Referring to FIG. 15, in operation S1501, a user selects information displayed in a function execution zone (i.e., the second zone 20) regarding a current function from a function execution zone, in order to terminate the current function.

In operation S1502, the sensing module 110 senses that the user has touched and selected the information regarding the current function.

In operation S1503, the sensing module 110 determines whether the user has dragged the information regarding the current function into the first zone 10. In operation S1504, if it is determined in operation S1502 that the user has dragged the information regarding the current function into the first zone, the sensing module 110 senses that a plurality of touch sensors 15 included in the first zone 10 have been sequentially touched, for example, in descending order, by the user and determines that a touch position has been shifted.

In operation S1505, the sensing module 110 determines whether the shifted touch position is included in the first zone 10. If it is determined in operation S1505 that the shifted touch position is included in the first zone 10, the sensing module 110 determines that the user has requested termination of the current function.

Accordingly, in operation S1506, the function execution module 120 terminates the current function.

In operation S1507, the display module 130 removes the information regarding the current function from the second zone 20.

According to the present exemplary embodiment, the user can execute a function by selecting a menu icon corresponding to the function and dragging the selected menu icon into a predetermined function execution zone. Therefore, the user can intuitively use any desired functions using a simple convenient method.

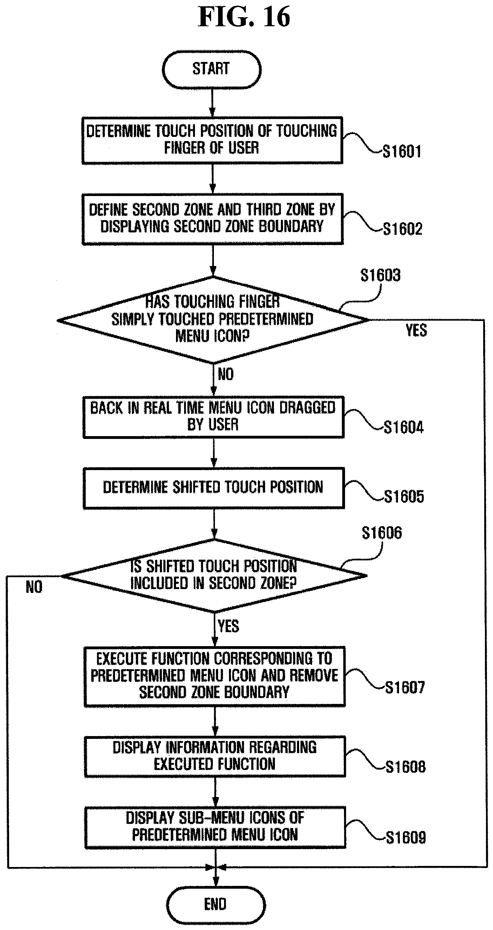

FIG. 16 is a flowchart illustrating an operating method of a mobile device that can be controlled using a touch and drag operation, according to another exemplary embodiment of the present invention. For convenience, the operating method illustrated in FIG. 16 will hereinafter be described in detail with reference to FIGS. 1 and 11 through 13.

A mobile device to which the operating method illustrated in FIG. 16 is applied includes a first zone 10, a second zone 20, a third zone 30, and a display module 130 which are all integrated into one body. The display module 130 is realized as a touch screen. The first zone 10 displays one or more menu icons 11 together with information regarding each of the menu icons 11.

Referring to FIG. 16, in operation S1601, the sensing module 110 determines a touch position of a touching finger of a user when a predetermined menu icon 11 displayed in the first zone 10 is selected.

In operation S1602, the display module 130 displays a second zone boundary 21 so that the second zone 20 and the third zone 30 can be defined.

In operation S1603, the sensing module 110 determines whether the touching finger has simply touched the predetermined menu icon 11 or has touched and dragged the predetermined menu icon 11, i.e., determines whether the touching finger has simply touched the predetermined menu icon 11 or not.

In operation S1604, if it is determined in operation S1603 that the touching finger has not simply touched the predetermined menu icon 11 but has touched and then dragged the predetermined menu icon 11, the display module 130 feeds back the predetermined menu icon 11 to the user in real time.

In operation S1605, the sensing module 110 senses that the touch position has been shifted and determines the shifted touch position based on a touch sensing signal transmitted thereto. In operation S1606, the sensing module 110 determines whether the shifted touch position is included in the second zone 20.

In operation S1607, if it is determined in operation S1606 that the shifted touch position is included in the second zone 20, the function execution module 120 executes a function corresponding to the predetermined menu icon 11, and removes the second zone boundary 21.

In operation S1608, the display module 130 displays in the third zone 30 a plurality of sub-menu icons 12 that can control information regarding the function corresponding to the predetermined menu icon 11.

The user may control the information regarding the function corresponding to the predetermined menu icon 11 using the sub-menu icons 12 displayed in the third zone 30.

According to the present exemplary embodiment, the user may terminate a current function by selecting information regarding the current function from the second zone 20 and dragging the selected information into the first zone 10, and this is the same as described above with reference to FIG. 15.

While the present invention has been particularly shown and described with reference to exemplary embodiments thereof, it will be understood by those of ordinary skill in the art that various changes in form and details may be made therein without departing from the -scope of the present invention as defined by the following claims

### Brief Description of the Drawings

The above and other aspects and features of the present invention will become more apparent by describing in detail exemplary embodiments thereof with reference to the attached drawings, in which:
FIG. 1 is a block diagram of a mobile device that can be controlled using a touch and drag operation according to an exemplary embodiment of the present invention;
FIGS. 2 and 4 are diagrams for illustrating a display module included in a mobile device that can be controlled using a touch and drag operation according to an exemplary embodiment of the present invention (an example of a display module illustrated in FIG. 1);
FIGS. 5 through 8 are diagrams for illustrating a display module included in a mobile device that can be controlled using a touch and drag operation according to another exemplary embodiment of the present invention (another example of the display module illustrated in FIG. 1);
FIG. 9 is a diagram for explaining the determination of whether a touch and drag operation has been performed in a mobile device that can be controlled using a touch and drag operation according to an exemplary embodiment of the present invention (the mobile device illustrated in FIG. 1, according to an exemplary embodiment of the present invention);
FIG. 10 is a diagram for illustrating a display module included in a mobile device that can be controlled using a touch and drag operation according to another exemplary embodiment of the present invention (another example of the display module illustrated in FIG. 1);
FIGS. 11 through 13 are diagrams for illustrating a display module included in a mobile device that can be controlled using a touch and drag operation according to another exemplary embodiment of the present invention (another example of the display module illustrated in FIG. 1);
FIG. 14 is a flowchart illustrating an operating method of a mobile device that can be controlled using a touch and drag operation, according to an exemplary embodiment of the present invention;
FIG. 15 is a flowchart illustrating a method of terminating a function currently being executed by a mobile device, according to an exemplary embodiment of the present invention; and
FIG. 16 is a flowchart illustrating an operating method of a mobile device that can be controlled using a touch and drag operation, according to another exemplary embodiment of the present invention.

### Industrial Applicability

As described above, the present invention has the following advantages.

According to the present invention, when a user selects a menu icon and then shifts a touch position to a function execution zone, a function corresponding to the selected menu icon is executed. Thus, the user can properly and precisely execute any desired functions using a simple method.

In addition, according to the present invention, when the user selects a plurality of menu icons and drags the selected menu icons into a predetermined zone at the same time, a plurality of functions respectively corresponding to the selected menu icons are simultaneously executed. Thus, frequent switch manipulations are not necessary.

Moreover, according to the present invention, a function corresponding to a menu icon cannot be executed by simply touching the menu icon. Thus, it is possible to prevent malfunction of a mobile device when the user mistakenly touches the mobile device.

## Claims

1. An operating method of a mobile device that can be controlled using a touch and drag operation, the mobile device having a touch screen, the method comprising:
displaying, by the device, one or more menu icons (11) in a first zone (10) on the touch screen;
sensing, by the device, a touch selection of a menu icon (11a) among the one or more menu icons (11) displayed in the first zone (10) on the touch screen;
visibly providing, by the device, a boundary (21) of a second zone (20) on the touch screen in response to the sensed touch selection, the boundary of the second zone being visible after the touch selection is sensed, and removing the visibly provided boundary of the second zone if the menu icon is dragged from the first zone to the second zone;
executing a function according to the dragging of the menu icon from the first zone to the second zone and displaying information regarding the function in the second zone; and
after beginning executing the function, displaying a plurality of sub-menu icons (12) that are used to control the information regarding the executed function.

2. The method of claim 1, wherein the first zone (10) comprises a point where touching and dragging of the menu icon begins.

3. The method of any preceding claim, wherein the second zone (20) comprises a point where touching and dragging of the menu icon ends.

4. The method of claim 1, wherein the function corresponds to the menu icon (11a) selected from the first zone (10).

5. The method of claim 1, wherein the first zone (10), the second zone (20) and a third zone (30) are automatically defined and distinguished from each other, wherein the plurality of sub-menu icons (12) is displayed in the third zone.

6. A mobile device that can be controlled using a touch and drag operation, the mobile device having a touch screen and comprising:
a display module (130), wherein the display module (130) is configured to visibly provide a boundary of a second zone (20) on the touch screen in response to a sensed touch selection, the boundary of the second zone being visible after the touch selection is sensed, and to remove the visibly provided boundary of the second zone if the menu icon is dragged from the first zone to the second zone;
a control module (140) configured to control the display module to display one or more menu icons (11) in a first zone (10) on the touch screen;
a sensing module (110) configured to sense a touch selection of a menu icon (11 a) among the one or more menu icons (11) displayed in the first zone (10) on the touch screen; and
a function execution module (120) configured to execute a function according to the dragging of the menu icon from the first zone to a second zone,
wherein the control module (140) is further configured to control the display module to display information regarding the function in the second zone (20) and, after beginning executing the function, display a plurality of sub-menu icons (12) that are used to control the information regarding the executed function.

7. The mobile device of claim 6, wherein the control module (140) is further configured to control the display module (130) to change the screen in response to the sensed touch selection.

8. The mobile device of claim 6 or 7, wherein the control module is further configured to control the display module (130) to visibly provide a third zone (30) on the touch screen in response to the sensed touch selection, wherein the plurality of sub-menu icons (12) is displayed in the third zone.

9. One or more computer program products comprising computer program instructions which when executed perform the method of one of claims 1 to 5.

## Patentansprüche

1. Betriebsverfahren für eine Mobilvorrichtung, die durch Berühren und Ziehen gesteuert werden kann, wobei die Mobilvorrichtung einen Tastbildschirm hat, und das Verfahren umfasst:
Anzeigen eines oder mehrerer Menüsymbole (11) durch die Vorrichtung in einer ersten Zone (10) auf dem Tastbildschirm;
Erfassen einer Berührungsauswahl eines Menüsymbols (11a) unter einem oder mehreren Menüsymbolen (11), die in der ersten Zone (10) auf dem Tastbildschirm angezeigt werden, durch die Vorrichtung;
sichtbares Bereitstellen einer Begrenzung (21) einer zweiten Zone (20) auf dem Tastbildschirm durch die Vorrichtung in Reaktion auf die erfasste Berührungsauswahl, wobei die Begrenzung der zweiten Zone sichtbar ist, nachdem die Berührungsauswahl erfasst wurde, und Entfernen der sichtbar bereitgestellten Begrenzung der zweiten Zone, wenn das Menüsymbol aus der ersten Zone in die zweite Zone gezogen wird;
Ausführen einer Funktion entsprechend dem Ziehen des Menüsymbols von der ersten Zone in die zweite Zone und Anzeigen von Informationen bezüglich der Funktion in der zweiten Zone; und
nach Beginn der Ausführung der Funktion, Anzeigen einer Vielzahl von Untermenüsymbolen (12), die zur Steuerung der Informationen bezüglich der ausgeführten Funktion verwendet werden.

2. Verfahren nach Anspruch 1, bei dem die erste Zone (10) einen Punkt umfasst, an dem das Berühren und Ziehen des Menüsymbols beginnt.

3. Verfahren nach einem der vorhergehenden Ansprüche, bei dem die zweite Zone (20) einen Punkt umfasst, an dem das Berühren und Ziehen des Menüsymbols endet.

4. Verfahren nach Anspruch 1, bei dem die Funktion dem aus der ersten Zone (10) ausgewählten Menüsymbol (11a) entspricht.

5. Verfahren nach Anspruch 1, bei dem die erste Zone (10), die zweite Zone (20) und eine dritte Zone (30) automatisch definiert und voneinander unterschieden werden, wobei die Vielzahl von Untermenüsymbolen (12) in der dritten Zone angezeigt wird.

6. Mobilvorrichtung, die durch Berühren und Ziehen gesteuert werden kann, wobei die Mobilvorrichtung einen Tastbildschirm hat und umfasst:
ein Anzeigemodul (130), wobei das Anzeigemodul (130) dazu eingerichtet ist, als Reaktion auf eine erfasste Berührungsauswahl eine Begrenzung einer zweiten Zone (20) auf dem Tastbildschirm sichtbar bereitzustellen, wobei die Begrenzung der zweiten Zone sichtbar ist, nachdem die Berührungsauswahl erfasst wurde, und die sichtbar bereitgestellte Begrenzung der zweiten Zone zu entfernen, wenn das Menüsymbol aus der ersten Zone in die zweite Zone gezogen wird;
ein Steuermodul (140), das dazu eingerichtet ist, das Anzeigemodul zu steuern, um ein oder mehrere Menüsymbole (11) in einer ersten Zone (10) auf dem Tastbildschirm anzuzeigen;
ein Erfassungsmodul (110), das dazu eingerichtet ist, eine Berührungsauswahl eines Menüsymbols (11a) unter einem oder mehreren Menüsymbolen (11) zu erfassen, die in der ersten Zone (10) auf dem Tastbildschirm angezeigt werden; und
ein Funktionsausführungsmodul (120), das dazu eingerichtet ist, eine Funktion entsprechend dem Ziehen des Menüsymbols von der ersten Zone zu einer zweiten Zone auszuführen,
wobei das Steuermodul (140) weiterhin dazu eingerichtet ist, das Anzeigemodul so zu steuern, dass es Informationen bezüglich der Funktion in der zweiten Zone (20) anzeigt und nach Beginn der Ausführung der Funktion eine Vielzahl von Untermenüsymbolen (12) anzeigt, die zur Steuerung der Informationen bezüglich der ausgeführten Funktion verwendet werden.

7. Mobilvorrichtung nach Anspruch 6, bei der das Steuermodul (140) weiterhin dazu eingerichtet ist, das Anzeigemodul (130) so zu steuern, dass es den Bildschirm in Reaktion auf die erfasste Berührungsauswahl ändert.

8. Mobilvorrichtung nach Anspruch 6 oder 7, bei der das Steuermodul weiterhin dazu eingerichtet ist, das Anzeigemodul (130) so zu steuern, dass als Reaktion auf die erfasste Berührungsauswahl eine dritte Zone (30) auf dem Tastbildschirm sichtbar bereitgestellt wird, wobei die zahlreichen Untermenüsymbole (12) in der dritten Zone angezeigt werden.

9. Ein oder mehrere Computerprogrammerzeugnisse, die Computerprogrammanweisungen umfassen, die bei Ausführung das Verfahren nach einem der Ansprüche 1 bis 5 ausführen.

## Revendications

1. Procédé de fonctionnement d'un dispositif mobile qui peut être commandé en utilisant une opération toucher-déposer, le dispositif mobile ayant un écran tactile, le procédé comprenant les opérations suivantes:
afficher, par le dispositif, une ou plusieurs icônes de menu (11) dans une première zone (10) sur l'écran tactile;
détecter, par le dispositif, une sélection tactile d'une icône de menu (11a) parmi les une ou plusieurs icônes de menu (11) affichées dans la première zone (10) sur l'écran tactile;
fournir de manière visible, par le dispositif, une limite (21) d'une deuxième zone (20) sur l'écran tactile en réponse à la sélection tactile détectée, la limite de la deuxième zone étant visible après la détection de la sélection tactile, et supprimer la limite fournie de manière visible de la deuxième zone si l'icône de menu est déplacée de la première zone à la deuxième zone;
exécuter une fonction en fonction du déplacement de l'icône de menu de la première zone vers la deuxième zone et afficher des informations concernant la fonction dans la deuxième zone; et
après avoir commencé à exécuter la fonction, afficher une pluralité d'icônes de sous-menu (12) qui sont utilisées pour contrôler les informations concernant la fonction exécutée.

2. Procédé selon la revendication 1, dans lequel la première zone (10) comprend un point où la fonction toucher-déposer de l'icône de menu commence.

3. Procédé selon l'une des revendications précédentes, dans lequel la deuxième zone (20) comprend un point où la fonction toucher-déposer de l'icône de menu se termine.

4. Procédé selon la revendication 1, dans lequel la fonction correspond à l'icône de menu (11a) sélectionnée dans la première zone (10).

5. Procédé selon la revendication 1, dans lequel la première zone (10), la deuxième zone (20) et une troisième zone (30) sont automatiquement définies et distinguées les unes des autres, dans lequel la pluralité d'icônes de sous-menu (12) est affichée dans la troisième zone.

6. Dispositif mobile qui peut être commandé en utilisant une opération toucher-déposer, le dispositif mobile ayant un écran tactile et comprenant:
un module d'affichage (130), dans lequel le module d'affichage (130) est configuré pour fournir de manière visible une limite d'une deuxième zone (20) sur l'écran tactile en réponse à une sélection tactile détectée, la limite de la deuxième zone étant visible après la détection de la sélection tactile, et pour supprimer la limite fournie de manière visible de la deuxième zone si l'icône de menu est déplacée de la première zone à la deuxième zone;
un module de commande (140) configuré pour commander le module d'affichage pour afficher une ou plusieurs icônes de menu (11) dans une première zone (10) sur l'écran tactile;
un module de détection (110) configuré pour détecter une sélection tactile d'une icône de menu (11a) parmi les une ou plusieurs icônes de menu (11) affichées dans la première zone (10) sur l'écran tactile; et
un module d'exécution de fonction (120) configuré pour exécuter une fonction selon le déplacement de l'icône de menu de la première zone à une deuxième zone,
dans lequel le module de commande (140) est en outre configuré pour commander le module d'affichage pour afficher des informations concernant la fonction dans la deuxième zone (20) et, après avoir commencé à exécuter la fonction, afficher une pluralité d'icônes de sous-menu (12) qui sont utilisées pour contrôler les informations concernant la fonction exécutée.

7. Dispositif mobile selon la revendication 6, dans lequel le module de commande (140) est en outre configuré pour commander le module d'affichage (130) pour changer l'écran en réponse à la sélection tactile détectée.

8. Dispositif mobile selon les revendications 6 ou 7, dans lequel le module de commande est en outre configuré pour commander le module d'affichage (130) pour fournir de manière visible une troisième zone (30) sur l'écran tactile en réponse à la sélection tactile détectée, dans lequel la pluralité d'icônes de sous-menu (12) est affichée dans la troisième zone.

9. Un ou plusieurs produits de programme informatique comprenant des instructions de programme informatique qui, lorsqu'elles sont exécutées, réalisent le procédé selon l'une des revendications 1 à 5.
